# EUROPEAN PATENT SPECIFICATION

(11) **EP 2 381 127 B1**
(45) Date of publication and mention of the grant of the patent: **23.07.2014**
(21) Application number: 11163162.8
(22) Date of filing: 20.04.2011
(51) Int. Cl.: F16F 13/10

(54) **Hydraulically damped bearing for mounting an engine**
Hydraulischer Dämpferlager zur Montage eines Motors
Palier à amortissement hydraulique pour le montage d'un moteur

(30) Priority: 20.04.2010 FR 1053002
(43) Date of publication of application: 26.10.2011
(73) Proprietor: TrelleborgVibracoustic GmbH, 64293 Darmstadt (DE)
(72) Inventor: Gentet, Frédéric, 44430 Le Loroux, Bottereau (FR)
(74) Representative: Flügel Preissner Kastel Schober

(56) References cited:
- FR-A1- 2 885 327
- GB-A- 2 268 566
- JP-A- 7 269 634

## Description

The present invention relates to a hydraulically damped bearing, particularly for mounting a motor vehicle engine, comprising a bearing spring made of an elastomeric material to support a bearing core, comprising a working chamber which is delimited by the bearing spring, comprising a compensation chamber which is separated from the working chamber by an intermediate plate and which is delimited by a compensation membrane made of an elastomeric material, in which the working chamber and the compensation chamber are filled with hydraulic liquid and are connected to one another via an overflow.

Such bearings are used to support a motor vehicle engine, on the one hand, in order to damp out the oscillations caused by unevennesses of the road surface and, on the other hand, in order to isolate acoustic vibrations. The oscillations caused by unevennesses of the road surface are damped by a hydraulic system, this hydraulic system being formed by a liquid-filled working chamber, by a compensation chamber, and by an overflow which connects the two chambers to one another. The operation of the hydraulic system can be described as follows. The working chamber becomes bigger or smaller as a result of a movement of the bearing spring, so that the liquid in the working chamber is forced via the overflow into the compensation chamber. Because the cross-sectional area of the overflow passage is smaller than the surface area of the bearing spring that causes an overflow, a damping effect is procured.

Document EP 1 628 040 A1 discloses a hydraulically damped bearing of the type mentioned in the introduction, which comprises a housing, a bearing spring made of an elastomeric material to support a bearing core, an intermediate plate, a compensation membrane, and an end cap. The bearing spring and the intermediate plate form a working chamber which is connected to a compensation chamber via an overflow formed in the intermediate plate. The compensation chamber is delimited by the intermediate plate and by the compensation membrane. The end cap, the compensation membrane and the intermediate plate are connected to the bearing spring by means of a clip-fastened connection, and the compensation membrane and the intermediate plate are housed in the end cap. Such a bearing does, however, have a large number of parts and, therefore, relatively high cost of manufacture.

JP 7-269634 A discloses an engine mount comprising a cover, a rubber cushion and a working chamber which is delimited by a retainer and a valve mechanism. Furthermore, the engine mount has a compensation chamber which is separated from the working chamber by the retainer and the valve mechanism and which is delimited by a compensation membrane. Both chambers are filled with a hydraulic liquid. Moreover, the engine mount comprises a flange which is fixed to the rubber cushion. The covering, the retainer and the compensation membrane are fixed to the flange by a circular metal fastening component. This fastening component is formed in the inner periphery upper surface of said flange. The fastening component comprises a base and an upper bed part having waveform parts and gap parts. For fixation the covering, the retainer and the compensation membrane to the flange they are firstly positioned on the base upper surface of the fastening component. After that, an insertion arrangement is carried out by positioning the engine mount in a receptacle fixture of a pressing machine. Then, a caulking fixture is gradually dropped from the upper part of the receptacle fixture and, therefore, each waveform part is narrowed down to an inner direction fixing the retainer, the compensation membrane and the covering to the flange.

As a result, the underlying objective of the invention is to improve a bearing of the type mentioned in the introduction in such a way that the number of parts, the weight and the cost of manufacture are reduced.

In order to achieve this objective, in the bearing of the type mentioned in the introduction, it is proposed that the intermediate plate comprises a fixing device for the compensation membrane, and that the said fixing device is pivotally arranged on the intermediate plate such that the fixing device immobilizes the compensation membrane against the intermediate plate when the hydraulically damped bearing is assembled.

In the bearing according to the invention, the compensation membrane is immobilized by means of a fixing device arranged on the intermediate plate. For this purpose, the compensation membrane is fitted into the intermediate plate. When the bearing is assembled, the fixing device is pivoted and the compensation membrane is immobilized against the intermediate plate. Thus, by comparison with conventional bearings, there is no longer any need to provide a separate end cap for immobilizing the compensation membrane against the intermediate plate. As a result, the bearing according to the invention is of comparatively low weight and has a comparatively low number of parts. Further, the bearing according to the invention is comparatively economical to manufacture given that there is no longer an end cap. Further, this means that the bearing can be assembled more simply and more reliably.

Some advantageous embodiments form the subject of the dependent claims.

Advantageously, the fixing device comprises at least two retention elements arranged at the external periphery of the intermediate plate, which are connected to the intermediate plate via respective connecting portions. The compensation membrane is immobilized against the intermediate plate by means of these retention elements which are capable of a pivoting movement.

In one advantageous embodiment, the retention elements are produced at right angles. This embodiment of the retention elements provides a large
bearing surface for the compensation membrane, which means that the compensation membrane is adequately supported as the pressure in the compensation chamber becomes established.

The retention elements advantageously comprise an engagement system, the said engagement system preferably comprising at least one engagement snug. By means of this engagement system, it is possible for the intermediate plate to be fixed against a bearing spring receiver device or against a housing. That represents an economical way of immobilizing something given that the engagement system can simply be manufactured by injection moulding during the production of the intermediate plate.

Advantageously, a receiving device is mounted on the bearing spring, into which receiving device the intermediate plate can be fitted. The receiving device is manufactured from a piece of plastic of annular shape which has been injection moulded and is connected firmly to the bearing spring.

In another advantageous embodiment, the fixing device is pivotally arranged at the intermediate plate such that as the intermediate plate is fitted into the receiving device, the fixing device is pivoted or tilted and immobilizes the compensation membrane against the intermediate plate. Thus, the intermediate plate is fixed simply by fitting it into the receiving device. As a result, simplicity of assembly is guaranteed. Further, it is also possible to dispatch this unit without the housing. Further, it is possible simply to change the intermediate plate or, respectively, to change the bearing spring or even to change the fixing device.

Advantageously, at least one projection is provided on the receiving device, which projection cooperates with the engagement snug. This then provides a simple fixing of the intermediate plate against the receiving device using a clip-fastened connection.

Furthermore, the bearing spring and the intermediate plate immobilized thereon can be immobilized on a bearing housing advantageously by means of an engaging connection. Such a connection can be unfastened without destroying it thus allowing a simple change of any defective components there might be.

In one advantageous embodiment, the intermediate plate is immobilized directly against a housing such that the fixing device is pivoted upon fitting into the bearing housing and immobilizes the compensation membrane against the intermediate plate.

Advantageously, at least two engagement grooves are provided on the bearing housing, which grooves cooperate with associated engagement snugs belonging to the retention elements. This then fixes the intermediate plate in the housing.

In another advantageous embodiment, the engagement grooves comprise a coaxial portion and a portion which extends in a peripheral direction, which opens into a recess. Thus, the intermediate plate is fixed into the housing by fitting it into an opening of the housing. Here, the fixing device pivots in such a way that the engagement snugs arranged on the retention elements are guided into the coaxial portions. The intermediate plate is then pushed into the opening of the housing far enough for the engagement snugs to reach the bottoms of the grooves in the coaxial portion. Next, there is a twist in the peripheral direction so that the engagement snug is guided in the portion which extends in the peripheral direction and finally engages, through cooperating shapes, in the recess. This then is a simple and reliable way of fixing the intermediate plate into the housing. Further, such engagement grooves can be manufactured in a simple way given that they can be manufactured during the injection-moulding of the housing, simply by using the corresponding moulding insert.

Advantageously, the intermediate plate is manufactured in the form of a one-piece thermoplastic injection moulding. By virtue of that, the intermediate plate can be manufactured with no additional manufacturing step.

Advantageously, the intermediate plate locally comprises components made of different plastics. Further, the connecting portion is advantageously manufactured in thermoplastic elastomer and the rest of the intermediate plate in thermoplastic. Thus, during pivoting, the retention elements can be deflected without breaking. Such an intermediate plate is manufactured by multi-shot injection moulding.

In another advantageous embodiment, the intermediate plate comprises a cage to receive a decoupling membrane.

In what follows, the invention will be explained in greater detail with reference to some embodiments which have been illustrated schematically in the drawings, in which:
Figure 1 is a front view of the bearing according to the invention, in a first embodiment;
Figure 2 is a perspective view of an intermediate plate that is used in the first embodiment of the bearing according to the invention;
Figure 3 is a perspective view of the intermediate plate of Figure 2, with the retention elements pivoted or tilted;
Figure 4 is a perspective view of the individual components of the bearing according to the invention, in the first embodiment;
Figure 5 is a section on V-V of Figure 1 through the bearing according to the invention;
Figure 6 is a front view of the bearing according to the invention, in a second embodiment;
Figure 7 is a perspective view of an intermediate plate which is used in the second embodiment of the bearing according to the invention;
Figure 8 is a perspective view of the intermediate plate of Figure 7, with the retention elements pivoted or tilted;
Figures 9 to 12 are perspective views of the operations involved in assembling the bearing according to the invention, in the second embodiment; and
Figure 13 is a section on XIII-XIII of Figure 6 through the bearing according to the invention.

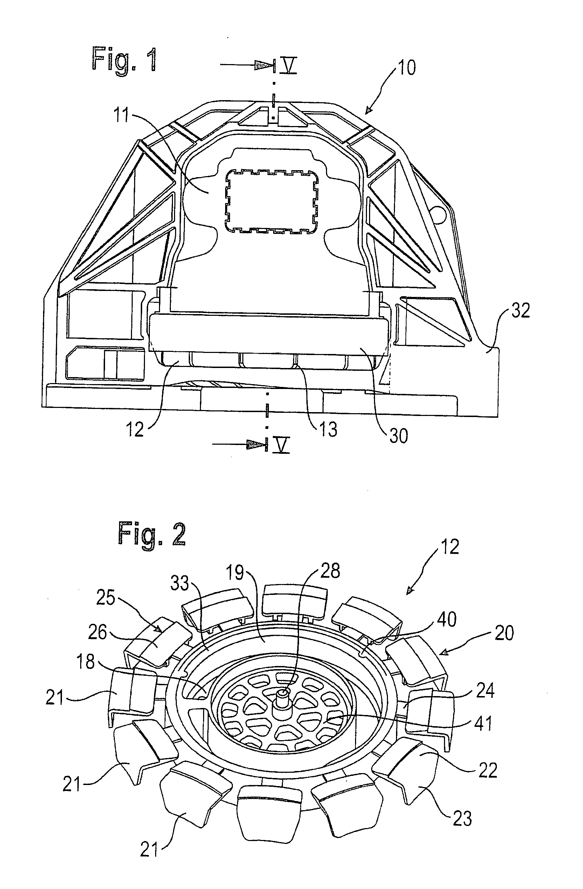

Figure 1 shows a hydraulically damped bearing 10 according to a first embodiment, for mounting a motor vehicle engine.

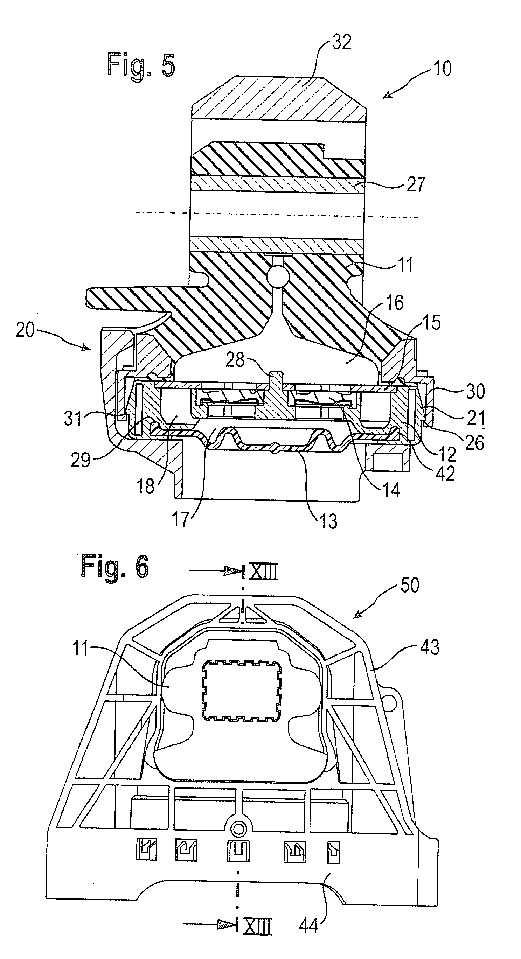

According to Figures 1 and 5, the bearing 10 comprises a bearing spring 11 made of elastomeric material to support a bearing core 27 on which an engine, not depicted, is supported. The bearing spring 11 delimits a working chamber 16. Following on after the working chamber 16 is an intermediate plate 12 which incorporates a decoupling membrane 14 and a grating plate 15. The intermediate plate 12 and the compensation membrane 13 delimit a compensation chamber 17. The working chamber 16 of the compensation chamber 17, which are filled with hydraulic liquid, are connected to one another via an overflow passage 18 formed in the intermediate plate 12. The intermediate plate 12 is connected to the bearing spring 11 via a receiver device 30 of annular shape mounted on the bearing spring 11.

The hydraulic unit, consisting of the bearing spring 11, of the intermediate plate 12 and of the compensation membrane 13, is housed in an outer housing 32.

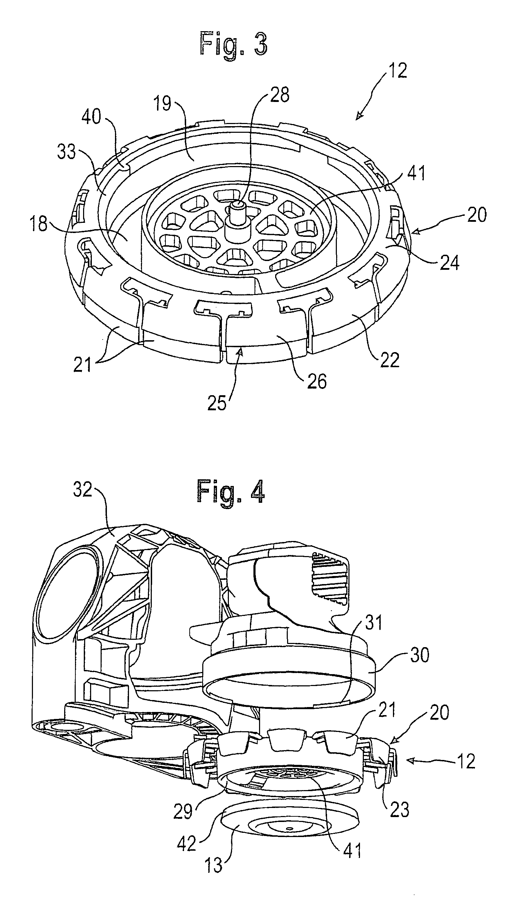

According to Figures 2 and 3, the intermediate plate 12 is produced in circular form and comprises a receiving cage 19 to receive the decoupling membrane 14. A grating plate 15 is supported and immobilized via a stud 28 arranged at the centre. The end of the receiving cage 19 is produced in the form of a grating 41. The overflow passage 18 that connects the working chamber 16 to the compensation chamber 17 extends around the periphery of the receiving cage 19. Extending around the periphery at the edge, on the underside of the intermediate plate 12 is a receiving channel 29 in which a bulge 42 of the compensation membrane 13 is housed.

To immobilize the compensation membrane 13 against the intermediate plate 12, the latter comprises a fixing device 20, as shown in Figure 2. The fixing device 20 comprises a plurality of retention elements 21 which are arranged at the external periphery of the intermediate plate 12. The retention elements 21 comprise a first portion 22 and a second portion 23 which portions are arranged at right angles to one another. The first portion 22 is connected to the intermediate plate 12 via a connecting portion 24. The connecting portion 24 allows the retention elements 21 to pivot. The intermediate plate 12 and the fixing device 20 are manufactured in plastic in the form of a one-piece injection moulding. Arranged on the first portion 22 is an engagement system 25 which comprises an engagement snug 26. As illustrated in Figure 2, the retention elements 21 are, in the unpivoted state, arranged in such a way that the first portion 22 is directed in a radial direction and the second portion 23 is directed in an axial direction of the intermediate plate 12.

The intermediate plate 12 locally comprises components made of different plastics. To guarantee flexible deflection of the retention elements 21, the connecting portions 24 are manufactured in a thermoplastic elastomer. The rest of the intermediate plate 12 is manufactured in a thermoplastic, to guarantee sufficient firmness.

Figure 3 shows the retention elements 21 in the pivoted state. Here, the first portions 22 lie parallel to and some distance from the exterior periphery of the intermediate plate 12, and the second portions 23 lie parallel to the underside of the intermediate plate 12, the second portions 22 forming a peripheral bearing surface on the edging side for the compensation membrane 13.

In what follows, the assembly of the bearing 10 will be explained in greater detail with reference to Figures 4 and 5. First of all, the decoupling membrane 14 is fitted into the cage 19 of the intermediate plate 12. Next, the grating plate 15 is slipped over the receiving stud 28 via a hole formed at its centre and is immobilized on this stud. Next, the compensation membrane 13 is fitted into the receiving channel 29 formed on the underside of the intermediate plate 12, and the bulge 42 of the compensation membrane 13 engages in the receiving channel 29. Next, the intermediate plate 12 with the compensation membrane 13 is fitted into the bearing spring 11 receiving device 30, as illustrated in Figure 4.

Because the diameter of the intermediate plate 12, combined with the vertically protruding retention elements 21 is greater, in the unpivoted state, than the inside diameter of the receiving device 30, the retention elements 21 pivot through approximately 90°. Here, the retention elements 21 surround the compensation membrane 13 in such a way that the compensation membrane 13 presses against the second portions 23 of the engagement elements 21. Engagement of the bulge 42 in the receiving channel 29 and immobilization of the compensation membrane 13 on the intermediate plate 12 by the retention elements 21 provide the compensation chamber 17 with sufficient fluid-tightness.

The intermediate plate 12 is immobilized on its edge by clip-fastening into the receiving device 30. The clip-fastened connection is achieved by means of the engagement snugs 26 and of the projections 31 produced in the receiving device 30, on which the engagement snugs 26 engage, pushing the intermediate plate 12 in. Finally, the bearing spring 11 with the intermediate plate 12 immobilized on this spring is mounted in the housing 32 and fixed thereto.

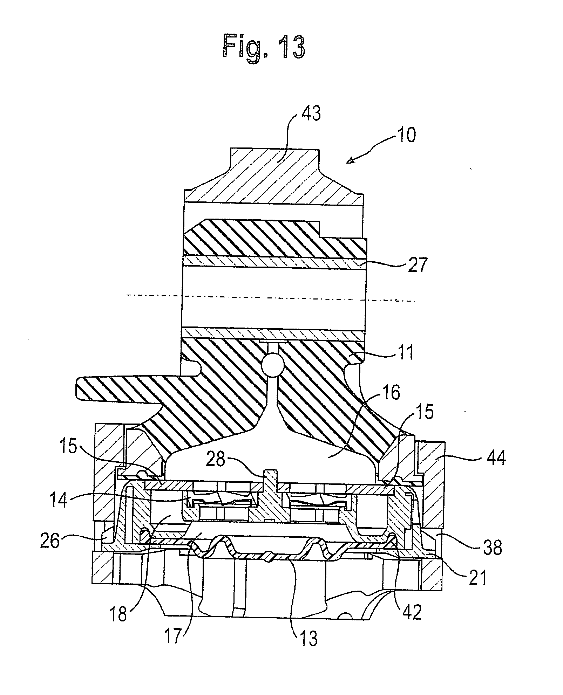

Figures 6 to 13 show a second embodiment of a bearing 50, and its description will employ the same reference symbols as have already been used for parts which are identical or parts which perform identical functions.

The bearing 50 differs from that of the first embodiment of Figures 1 to 5 in that the intermediate plate 12 is immobilized directly against a housing 43. Thus it is possible to dispense with the receiving device 30 on the bearing spring 11. The housing 43 comprises a receiving region 44 of annular shape, which is provided with an opening 39.

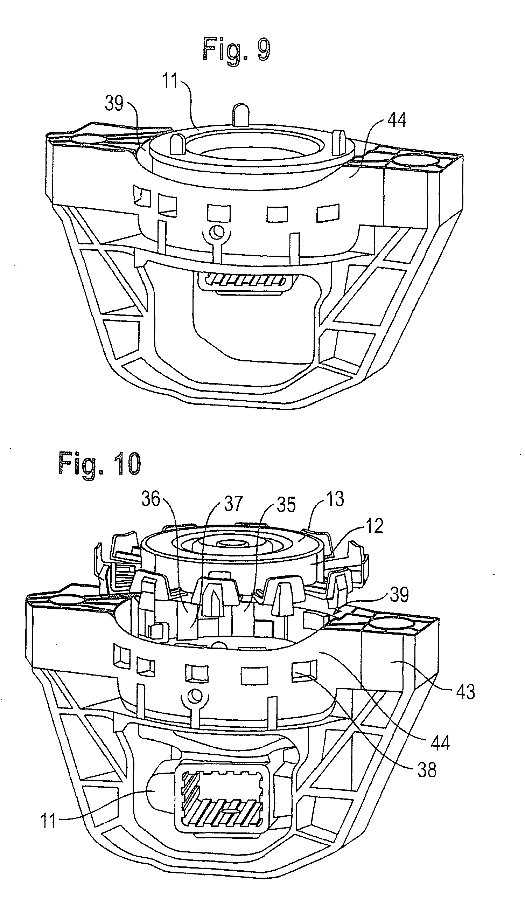

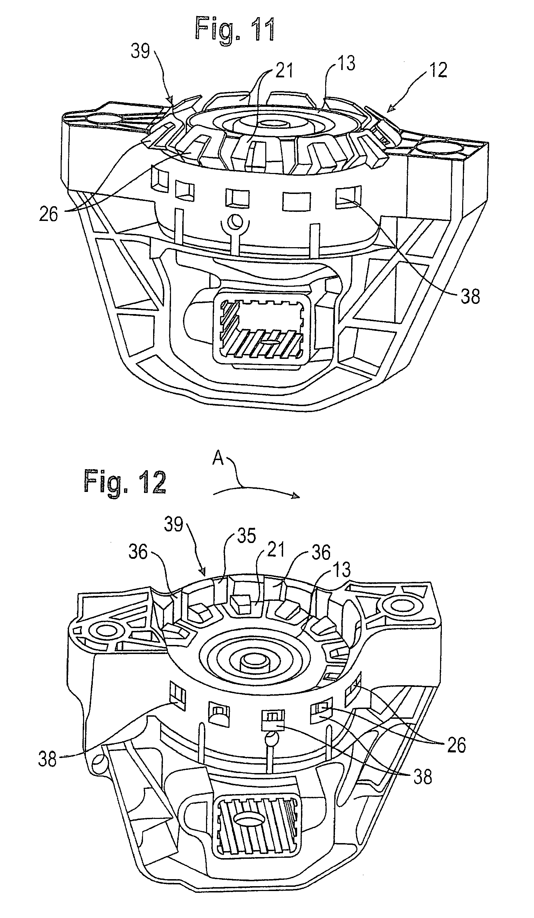

As illustrated in Figures 10 and 12, the receiving region 44 comprises a plurality of recesses 38 directed in a peripheral direction, and which serve to immobilize the intermediate plate 12 in the receiving region 44. Engagement grooves 35 lead to these recesses 38. The engagement grooves 35 comprise a portion 36 which extends in an axial direction and a portion 37 which extends perpendicular thereto, in the peripheral direction of the receiving region 44 of the housing 43. The portion 37 opens into the recesses 38.

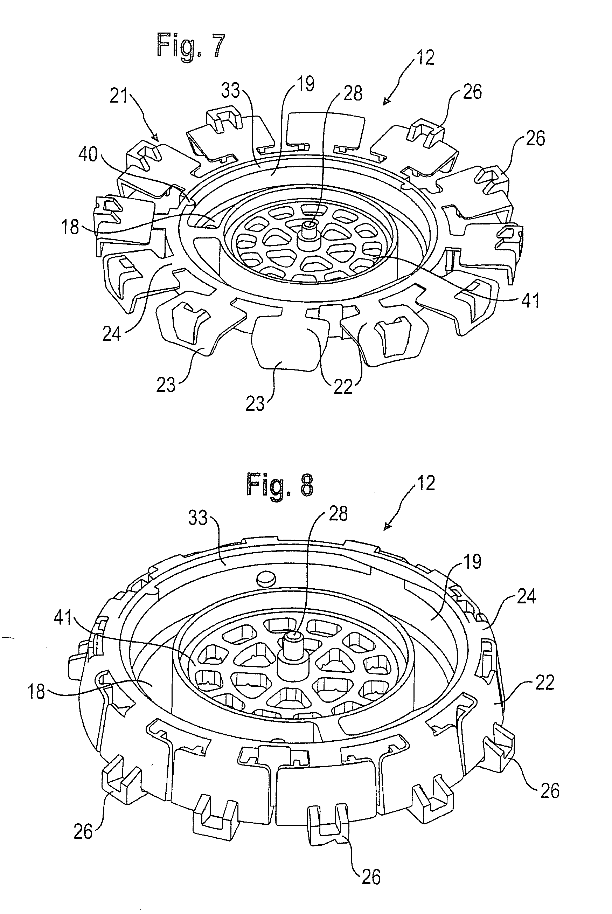

As shown in Figures 6 and 7, the intermediate plate 12 of the bearing 50 differs in terms of the design of the engagement snug 26, which is produced as a projection.

In what follows, the assembly of the bearing 50 will be described with reference to Figures 9 to 12. First of all, the bearing spring 11 is fitted into the opening 39 of the receiving region 44. Next, the decoupling membrane 14 and the grating plate 15 are fitted into the intermediate plate 12 and the compensation membrane 13 is then fitted into the intermediate plate 12 in a way corresponding to the first embodiment. After that, the intermediate plate 12 is fitted into the opening 39. In this instance, the retention elements 21 pivot, and a respective engagement snug 26 engages in a coaxial portion 36 of the engagement groove 35 of the housing 42. The intermediate plate 12 is then pushed into the opening 39 and the retention elements 21 pivot completely through 90° and surround the compensation membrane 37 on its edge side. The intermediate plate 12 is then slipped into the receiving region 44 far enough for the engagement snugs 26 to come into abutment against the bottoms of the grooves in the coaxial portion 36. Next, the intermediate plate 12 is turned, as illustrated in Figure 12 by the arrow A. That causes the engagement snugs 26 to slide in the portions 37 which extend in the peripheral direction towards the recesses 38 until the engagement snugs 26 finally engage in the recesses 38. That affords immobilization of the intermediate plate 12 in the receiving region 44 of the housing 32, and the intermediate plate 12 presses against the bearing spring 11 and delimits the working chamber 13.

The bearing 10, 50 according to the invention has the distinguishing feature that the compensation membrane 13 is immobilized against the intermediate plate 12 by means of a pivoting fixing device. By virtue of that, a simple structure is obtained given that there is no need for any additional auxiliary element, such as a separate end cap for example, to immobilize the compensation membrane 13. In addition, a simple and reliable assembly is guaranteed.

### List of Reference Signs

- 10.: Hydraulic bearing
- 11.: Bearing spring
- 12.: Intermediate plate
- 13.: Compensation membrane
- 14.: Decoupling membrane
- 15.: Grating plate
- 16.: Working chamber
- 17.: Compensation chamber
- 18.: Overflow
- 19.: Receiving cage
- 20.: Fixing device
- 21.: Gripping element
- 22.: First section
- 23.: Second section
- 24.: Connecting section
- 25.: Engagement system
- 26.: Engagement snug
- 27.: Bearing core
- 28.: Stud
- 29.: Receiving channel
- 30.: Receiving device
- 31.: Projection
- 32.: Housing
- 35.: Engagement groove
- 36.: Coaxial portion
- 37.: Portion extending in the pe-ripheral direction
- 38.: Recess
- 39.: Opening
- 41.: Grating
- 42.: Bulge
- 43.: Housing
- 44.: Receiving region
- 50.: Hydraulic bearing
- A.: Arrow

## Claims

1. Hydraulically damped bearing (10), particularly for mounting a motor vehicle engine, comprising a bearing spring (11) made of an elastomeric material to support a bearing core, comprising a working chamber (16) which is delimited by the bearing spring (11), comprising a compensation chamber (17) which is separated from the working chamber (16) by an intermediate plate (12) and which is delimited by a compensation membrane (13) made of an elastomeric material, in which bearing the working chamber (16) and the compensation chamber (17) are filled with hydraulic liquid and are connected to one another via an overflow (18), **characterized in that** the intermediate plate (12) comprises a fixing device (20) for the compensation membrane (13), and that said fixing device (20) is pivotally arranged on the intermediate plate (12) such that the fixing device (20) immobilizes the compensation membrane (13) against the intermediate plate (12) when the hydraulically damped bearing (11) is assembled.

2. Bearing according to Claim 1, **characterized in that** the fixing device (20) comprises at least two retention elements (21) arranged at the external periphery of the intermediate plate (12), which are connected to the intermediate plate (12) via respective connecting portions (24).

3. Bearing according to Claim 2, **characterized in that** the retention elements (21) are produced at right angles.

4. Bearing according to Claim 2 or 3, **characterized in that** the retention elements (21) comprise an engagement system (25), the said engagement system (25) preferably comprising at least one engagement snug (26).

5. Bearing according to any one of Claims 1 to 4, **characterized in that** a receiving device (30) is mounted on the bearing spring (11), into which receiving device the intermediate plate (12) can be fitted.

6. Bearing according to Claim 5, **characterized in that** the fixing device (20) is pivotally arranged at the intermediate plate (12) such that as the intermediate plate (12) is fitted into the receiving device (30), the fixing device (20) tilts and immobilizes the compensation membrane (13) against the intermediate plate (12).

7. Bearing according to Claim 5 or 6, **characterized in that** at least one projection (31) is provided on the receiving device (30), which projection cooperates with the engagement snug (26).

8. Bearing according to any one of Claims 5 to 7, **characterized in that** the bearing spring (11) and the intermediate plate (12) immobilized thereon can be immobilized on a bearing housing (32) by means of an engaging connection.

9. Bearing according to Claim 4, **characterized in that** the intermediate plate (12) is immobilized directly against a housing (43) that the fixing device (20) tilts upon fitting into the bearing housing (43) and immobilizes the compensation membrane (13) against the intermediate plate (12).

10. Bearing according to Claim 9, **characterized in that** at least two engagement grooves (35) are made on the bearing housing (43) and cooperate with associated engagement snugs (26) belonging to the retention elements (21).

11. Bearing according to Claim 10, **characterized in that** the engagement grooves (35) comprise a coaxial portion (36) and a portion (37) which extends in a peripheral direction and which opens into a recess (38).

12. Bearing according to any one of Claims 1 to 11, **characterized in that** the intermediate plate (12) is manufactured in the form of a one-piece thermoplastic injection moulding.

13. Bearing according to any one of Claims 1 to 11, **characterized in that** the intermediate plate (12) locally comprises components made of different plastics.

14. Bearing according to Claim 13, **characterized in that** the connecting portion (24) is manufactured in a thermoplastic elastomer and the remainder of the intermediate plate (12) is manufactured in a thermoplastic.

15. Bearing according to any one of Claims 1 to 14, **characterized in that** the intermediate plate (12) comprises a cage (19) for housing a decoupling membrane (14).

## Patentansprüche

1. Hydraulisch gedämpftes Lager (10), insbesondere zur Montage eines Kraftfahrzeugmotors, das eine Lagerfeder (11) umfasst, die aus einem elastomeren Material hergestellt ist, um einen Lagerkern zu lagern, das eine Arbeitskammer (16) umfasst, die durch die Lagerfeder (11) begrenzt wird, das eine Ausgleichskammer (17) umfasst, die von der Arbeitskammer (16) durch eine Zwischenplatte (12) getrennt ist und durch eine Ausgleichsmembran (13), die aus einem elastomeren Material hergestellt ist, begrenzt wird, in welchem Lager die Arbeitskammer (16) und die Ausgleichskammer (17) mit Hydraulikflüssigkeit gefüllt und miteinander über einen Überlauf (18) verbunden sind, **dadurch gekennzeichnet, dass** die Zwischenplatte (12) eine Fixiereinrichtung (20) für die Ausgleichsmembran (13) umfasst, und dass die Fixiereinrichtung (20) schwenkbar auf der Zwischenplatte (12) derart angeordnet ist, dass die Fixiereinrichtung (20) die Ausgleichsmembran (13) gegen die Zwischenplatte (12) immobilisiert, wenn das hydraulisch gedämpfte Lager (11) zusammengebaut wird.

2. Lager nach Anspruch 1, **dadurch gekennzeichnet, dass** die Fixiereinrichtung (20) zumindest zwei Rückhalteelemente (21) umfasst, die am äußeren Randbereich der Zwischenplatte (12) angeordnet sind und die mit der Zwischenplatte (12) über jeweilige Verbindungsabschnitte (24) verbunden sind.

3. Lager nach Anspruch 2, **dadurch gekennzeichnet, dass** die Rückhalteelemente (21) im rechten Winkel hergestellt sind.

4. Lager nach Anspruch 2 oder 3, **dadurch gekennzeichnet, dass** die Rückhalteelemente (21) ein Verrastungssystem (25) umfassen, wobei besagtes Verrastungssystem (25) bevorzugt zumindest eine Rastnase (26) umfasst.

5. Lager nach einem der Ansprüche 1 bis 4, **dadurch gekennzeichnet, dass** eine Aufnahmeeinrichtung (30) auf der Lagerfeder (11) montiert ist, in welche Aufnahmeeinrichtung die Zwischenplatte (12) eingepasst werden kann.

6. Lager nach Anspruch 5, **dadurch gekennzeichnet, dass** die Fixiereinrichtung (20) schwenkbar an der Zwischenplatte (12) derart angeordnet ist, dass, während die Zwischenplatte (12) in die Aufnahmeeinrichtung (30) eingepasst wird, sich die Fixiereinrichtung (20) neigt und die Ausgleichsmembran (13) gegen die Zwischenplatte (12) immobilisiert.

7. Lager nach Anspruch 5 oder 6, **dadurch gekennzeichnet, dass** zumindest ein Vorsprung (31) an der Aufnahmeeinrichtung (30) vorgesehen ist, welcher Vorsprung mit der Rastnase (26) zusammenwirkt.

8. Lager nach einem der Ansprüche 5 bis 7, **dadurch gekennzeichnet, dass** die Lagerfeder (11) und die darauf immobilisierte Zwischenplatte (12) mittels einer Rastverbindung an einem Lagergehäuse (32) immobilisiert werden können.

9. Lager nach Anspruch 4, **dadurch gekennzeichnet, dass** die Zwischenplatte (12) unmittelbar gegen ein Gehäuse (43) immobilisiert wird, dass sich die Fixiereinrichtung (20) beim Einpassen in das Lagergehäuse (43) neigt und die Augleichsmembran (13) gegen die Zwischenplatte (12) immobilisiert.

10. Lager nach Anspruch 9, **dadurch gekennzeichnet, dass** zumindest zwei Rastnuten (35) an dem Lagergehäuse (43) gefertigt sind und mit dazugehörigen Rastnasen (26) zusammenwirken, die zu den Rückhalteelementen (21) gehören.

11. Lager nach Anspruch 10, **dadurch gekennzeichnet, dass** die Rastnuten (35) einen koaxialen Abschnitt (36) und einen Abschnitt (37) umfassen, der sich in einer Umfangsrichtung erstreckt und in eine Aussparung mündet (38).

12. Lager nach einem der Ansprüche 1 bis 11, **dadurch gekennzeichnet, dass** die Zwischenplatte (12) in der Form eines einstückigen thermoplastischen Spritzgussformteils hergestellt wird.

13. Lager nach einem der Ansprüche 1 bis 11, **dadurch gekennzeichnet, dass** die Zwischenplatte (12) lokal Komponenten umfasst, die aus unterschiedlichen Kunststoffen hergestellt sind.

14. Lager nach Anspruch 13, **dadurch gekennzeichnet, dass** der Verbindungsabschnitt (24) aus einem thermoplastischen Elastomer hergestellt ist und der Rest der Zwischenplatte (12) aus einem Thermoplast hergestellt ist.

15. Lager nach einem der Ansprüche 1 bis 14, **dadurch gekennzeichnet, dass** die Zwischenplatte (12) einen Käfig (19) zur Unterbringung einer Entkopplungsmembran (14) umfasst.

## Revendications

1. Support à amortissement hydraulique (10), en particulier pour le montage d'un moteur de véhicule automobile, comprenant un ressort de support (1) réalisé en matériau élastomère pour supporter un noyau de support, comprenant une chambre de travail (16) qui est délimitée par le ressort de support (11), comprenant une chambre de compensation (17) qui est séparée de la chambre de travail (16) par une plaque intermédiaire (12) et qui est délimitée par une membrane de compensation (13) réalisée en matériau élastomère, dans lequel la chambre de travail (16) et la chambre de compensation (17) sont remplies d'un liquide hydraulique et sont connectées l'une à l'autre via un déversement (18), **caractérisé en ce que** la plaque intermédiaire (12) comprend un dispositif de fixation (20) pour la membrane de compensation (13), et **en ce que** ledit dispositif de fixation (20) est agencé de manière pivotante sur la plaque intermédiaire (12) de telle façon que le dispositif de fixation (20) immobilise la membrane de compensation (13) contre la plaque intermédiaire (12) quand le support à amortissement hydraulique (10) est assemblé.

2. Support selon la revendication 1, **caractérisé en ce que** le dispositif de fixation (20) comprend au moins deux éléments de rétention (21) agencés à la périphérie externe de la plaque intermédiaire (12), qui sont connectés à la plaque intermédiaire (12) via des portions de connexion respectives (24).

3. Support selon la revendication 2, **caractérisé en ce que** les éléments de rétention (21) sont produits à angle droit.

4. Support selon la revendication 2 ou 3, **caractérisé en ce que** les éléments de rétention (21) comprennent un système d'engagement (25), ledit système d'engagement (25) comprenant de préférence au moins un ergot d'engagement (26).

5. Support selon l'une quelconque des revendications 1 à 4, **caractérisé en ce qu'**un dispositif de réception (30) est monté sur le ressort de support (11), dispositif de réception dans lequel peut être montée la plaque intermédiaire (12).

6. Support selon la revendication 5, **caractérisé en ce que** le dispositif de fixation (20) est agencé de manière pivotante sur la plaque intermédiaire (12), de telle façon que lorsque la plaque intermédiaire (12) est montée dans le dispositif de réception (30), le dispositif de fixation (20) bascule et immobilise la membrane de compensation (13) contre la plaque intermédiaire (12).

7. Support selon la revendication 5 ou 6, **caractérisé en ce qu'**au moins une projection (31) est prévue sur le dispositif de réception (30), ladite projection coopérant avec l'ergot d'engagement (26).

8. Support selon l'une quelconque des revendications 5 à 7, **caractérisé en ce que** le ressort de support (11) et la plaque intermédiaire (12) immobilisée sur lui-même peuvent être immobilisés sur un boîtier de support (32) au moyen d'une connexion à engagement.

9. Support selon la revendication 4, **caractérisé en ce que** la plaque intermédiaire (12) est immobilisée directement contre un boîtier (43) que fait basculer le dispositif de fixation (20) lors du montage dans le boîtier de support (43) et immobilise la membrane de compensation (13) contre la plaque intermédiaire (12).

10. Support selon la revendication 9, **caractérisé en ce qu'**au moins deux gorges d'engagement (35) sont ménagées sur le boîtier de support (43) et coopèrent avec des ergots d'engagement associés (26) appartenant aux éléments de rétention (21).

11. Support selon la revendication 10, **caractérisé en ce que** les gorges d'engagement (35) comprennent une portion coaxiale (36) et une portion (37) qui s'étend dans une direction périphérique et qui s'ouvre dans un évidement (38).

12. Support selon l'une quelconque des revendications 1 à 11, **caractérisé en ce que** la plaque intermédiaire (12) est fabriquée sous la forme d'un article moulé par injection en matière thermoplastique d'une seule pièce.

13. Support selon l'une quelconque des revendications 1 à 11, **caractérisé en ce que** la plaque intermédiaire (12) comprend localement des composants réalisés en différentes matières plastiques.

14. Support selon la revendication 13, **caractérisé en ce que** la portion de connexion (24) est fabriquée en élastomère thermoplastique, et le reste de la plaque intermédiaire (12) est fabriqué en une matière thermoplastique.

15. Support selon l'une quelconque des revendications 1 à 14, **caractérisé en ce que** la plaque intermédiaire (12) comprend une cage (19) pour abriter une membrane de découplage (14).
